## Europäisches Patentamt

## European Patent Office

## Office européen des brevets

(11) Veröffentlichungsnummer: **0 096 858**
**B1**

(12) **EUROPÄISCHE PATENTSCHRIFT**

(45) Veröffentlichungstag der Patentschrifft:
07.02.90

(51) Int. Cl. ⁵: **B 60 N 2/22**

(21) Anmeldenummer: 83105679.1

(22) Anmeldetag: 10.06.83

(54) Rückenlehne für einen Fahrzeugsitz.

(30) Priorität: 16.06.82 DE 3222506

(43) Veröffentlichungstag der Anmeldung:
28.12.83 Patentblatt 83/52

(45) Bekanntmachung des Hinweises auf die Patenterteilung:
07.02.90 Patentblatt 90/06

㊽ Bennante Vertragsstaaten:
FR GB IT

(56) Entgegenhaltungen:
DE-A-1 954 848
FR-A-2 129 678
FR-A-2 515 946
US-A-3 043 624

(73) Patentinhaber: KEIPER RECARO GmbH & Co.
Büchelstrasse 54-58
D-5630 Remscheid 14 (DE)

(72) Erfinder: Göldner, Walther, Dipl. Ing. (FH)
Fichtenweg 7
D-7306 Denkendorf (DE)

(74) Vertreter: Patentanwälte Phys. Bartels Dipl.-Ing. Fink
Dr.-Ing. Held
Lange Strasse 51
D-7000 Stuttgart 1 (DE)

EP 0 096 858 B1

## Beschreibung

Die Erfindung betrifft eine Rückenlehne für einen Fahrzeugsitz, insbesondere einen Kraftfahrzeugsitz, mit Teile eines Polsterträgers bildenden Seitenholmen aus Stahlblech und einem Jochteil, das sich vom einen zum anderen Seitenholm im Bereich von deren oberem Ende erstreckt.

Bei den bekannten Rückenlehnen dieser Art ist das Jochteil ebenso wie die Seitenholme eine aus Stahlblech bestehende Profilschiene, die mit den Seitenholmen verschweißt ist. Sofern, wie dies häufig der Fall ist, die Rückenlehne eine Halterung für die Tragstange oder Tragstangen einer Kopfstütze aufweisen muß, sind außer den Seitenholmen und dem Jochteil weitere Bauteile notwendig, weil die Abmessungen des Jochteils zu gering sind, um es als alleinige Kopfstützenhalterung verwenden zu können. Für die Kopfstützenhalterung ist daher bei diesen bekannten Sitzen wenigstens eine im Abstand unterhalb des Jochteils liegende Traverse erforderlich, welche an den Seitenholmen festgelegt ist und die Kopfstützenhalterung oder Teile derselben trägt. Ebenso sind, falls die Rückenlehne mit einer schwenkbaren Schulterstütze ausgerüstet ist, zusätzliche Bauteile als Halterung für diese Schulterstütze notwendig. Handelt es sich bei der Rückenlehne um eine solche, welche nicht nur um eine Querachse geschwenkt, sondern auch um eine solche Achse nach vorne geklappt werden kann, dann müssen außerdem Halteelemente an den Seitenholmen befestigt werden, welche den Mechanismus zum Lösen der Klappsperre tragen. Durch alle diese zusätzlichen Bauteile werden das Gewicht und die Kosten der Rückenlehne deutlich erhöht.

Der Erfindung liegt die Aufgabe zugrunde, eine Rückenlehne für Fahrzeugsitze zu schaffen, die eine Verringerung des Gewichtes und der Kosten ermöglicht, und zwar insbesondere dann, wenn in die Rückenlehne eine Kopfstützenhalterung und/oder eine Schulterstütze und/oder ein Mechanismus zum Lösen einer Klappsperre integriert werden soll. Diese Aufgabe löst eine Rückenlehne mit den Merkmalen des Anspruches 1.

Sowohl die Vereinigung des Jochteils mit den an ihm vorzusehenden Mitteln zu einer Baueinheit als auch die Ausbildung dieser Baueinheit als einstückiger Kunststoffkörper ermöglichen erhebliche Einsparungen an Gewicht und Fertigungskosten. Dabei ist von Vorteil, daß ein derartiger Kunststoffkörper auch eine Realisierung relativ komplizierter Formen gestattet, ohne die Fertigungskosten zu erhöhen.

Ist eine Schulterstütze vorgesehen, dann ist auch diese vorteilhafterweise als einstückiger Kunststoffkörper ausgebildet, an den, da üblicherweise bei Vorhandensein einer Schulterstütze die Kopfstütze von dieser Schulterstütze getragen wird, die Halterung für die Kopfstütze angeformt sein kann. Auch die zusammenwirkenden Elemente, welche die Schulterstütze in der gewählten Schwenkstellung arretieren, können einstückig mit der Schulterstütze bzw. dem Jochteil ausgebildet sein, so daß auch durch diese Verriegelungseinrichtung sich das Gewicht und der Fertigungsaufwand der Rückenlehne praktisch nicht erhöht.

Bei einer bevorzugten Ausführungsform weist die Halterung für eine Kopfstütze wenigstens einen Führungskanal für die Aufnahme einer Tragstange der Kopfstütze auf, der einen quadratischen Querschnitt hat, wobei die Seitenlänge dieses Quadrates an den Durchmesser der als Rundstab ausgebildeten Tragstange angepaßt ist. Mit einem solchen Führungskanal läßt sich auch mit relativ großen Fertigungstoleranzen noch eine spielfreie Führung der Tragstange erreichen, ohne die Reibung zwischen Tragstange und Führungskanal zu groß werden zu lassen. Die Anpassungsfähigkeit des Führungskanals an die Maßabweichungen der Tragstange können durch Stege verbessert werden, welche den Führungskanal nach vorne und hinten begrenzen und in Kanallängsrichtung im Abstand nebeneinander angeordnet sind, weil durch solche Stege die elastische Nachgiebigkeit der Kanalwand vergrößert wird. Solche Stege vereinfachen andererseits erheblich die Herstellung des Jochteils, das auf diese Weise mit einem oder mehreren Führungskanälen versehen werden kann, welche sich von der Oberseite bis zur Unterseite des Jochteils erstrecken, also durchgehend sind.

Besondere Vorteile ergeben sich aus der erfindungsgemäßen Ausbildung des Jochteils als Kunststoffkörper auch dann, wenn das Jochteil nicht fest mit den Seitenholmen verbunden ist, sondern nur einen biegesteifen Abstandhalter bildet, der zwischen die Seitenholme gelegt ist und zusammen mit einem biegeweichen Blech, das an der Rückseite des Jochteils anliegt und mit der Außenseite der beiden Seitenholme fest verbunden ist, verhindert, daß eine Belastung der Rückenlehne von vorne her zu einer Torsionsbeanspruchung der Seitenholme führen kann. Die Seitenholme können dann nur eine Biegebeanspruchung erfahren, wobei das Jochteil eine Annäherung der Seitenholme zueinander verhindert. Eine Biegesteifigkeit der Seitenholme ist hier nur in Schwenkrichtung der Rückenlehne erforderlich.

Vorteilhafte Ausgestaltungen der Rückenlehne dann, wenn das Jochteil nicht unmittelbar mit den Seitenholmen verbunden ist, sondern nur einen knick- und biegesteifen Abstandhalter bildet, sind Gegenstand der Ansprüche 8 bis 11.

Im folgenden ist die Erfindung anhand von zwei in der Zeichnung dargestellten Ausführungsbeispielen im einzelnen erläutert.
Es zeigen:

Fig. 1 eine Draufsicht auf die dem Rücken des Sitzbenutzers zugekehrte Vorderseite des ersten Ausführungsbeispiels bei abgenommener Polsterung,

Fig. 2 eine Seitenansicht des ersten Ausführungsbeispiels, wobei von der Polsterung nur der Umriß angedeutet ist,

Fig. 3 einen Schnitt nach der Linie III - III der Fig. 1,

Fig. 4 einen Schnitt nach der Linie IV - IV der Fig. 1,

Fig. 5 einen Schnitt nach der Linie V - V der Fig. 1,

Fig. 6 einen Schnitt nach der Linie VI - VI der Fig. 1,

Fig. 7 einen unvollständig dargestellten Längsschnitt des zweiten Ausführungsbeispiels an der in Fig. 8 mit VII - VII gekennzeichneten Stelle, wobei von der Polsterung nur deren Umriß angedeutet ist,

Fig. 8 eine Draufsicht auf die dem Rücken des Sitzbenutzers zugekehrte Vorderseite des zweiten Ausführungsbeispiels ohne Schulterstütze und Polsterung,

Fig. 9 eine Draufsicht auf die Vorderseite der Schulterstütze des zweiten Ausführungsbeispiels,

Fig.10 einen Schnitt nach der Linie X - X der Fig. 8,

Fig.11 einen Schnitt durch die Rückenstütze nach der Linie XI - XI der Fig. 9,

Fig.12 einen Schnitt nach der Linie XII - XII der Fig. 9.

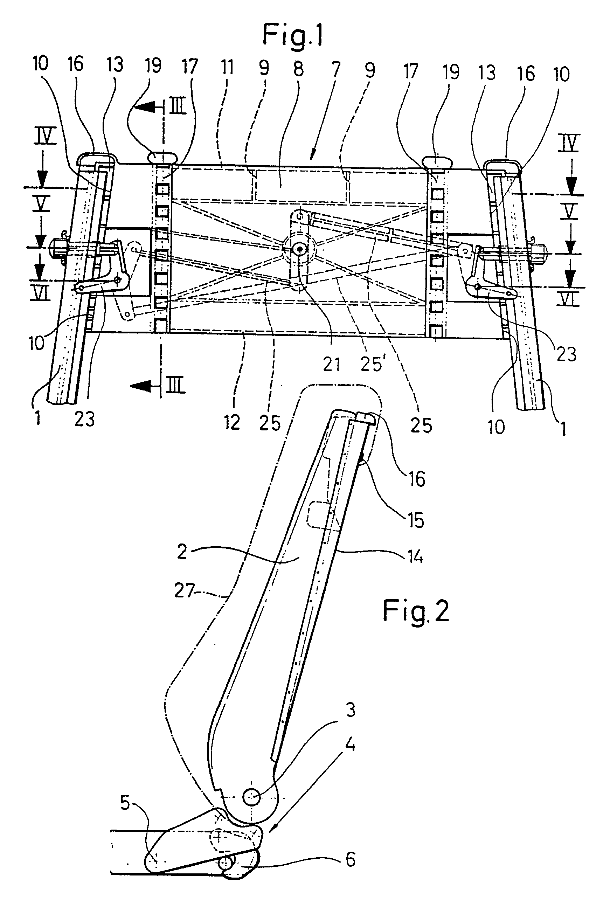

Eine Rückenlehne für einen Kraftfahrzeugsitz weist zwei spiegelbildlich gleich ausgebildete Längsholme 1 auf, die, wie Fig. 1 zeigt, sich gegen ihr oberes Ende hin wie die Schenkel eines Trapezes nähern. Das Querschnittsprofil der Längsholme 1 ist C-ähnlich, wobei die beiden Schenkel 1' und 1" parallel zueinander verlaufen und der Jochteil durch eine breite, nach innen vorspringende Sicke 2 versteift ist. Sowohl die Breite dieser Sicke als auch die Breite des Längsholms nimmt nach unten hin zu.

Das untere Ende der beiden Längsholme 1 ist um eine Querachse 3 schwenkbar und in wählbarer Neigungslage feststellbar mit je einem Gelenkbeschlag 4 verbunden, der seinerseits um eine zur Querachse 3 parallele Klappachse 5 schwenkbar am Sitzgestell angelenkt ist. Die Rückenlehne kann jedoch nur dann um die Klappachse 5 nach vorne geklappt werden, wenn eine Klappsperre 6 gelöst ist, die in bekannter Weise einen schwenkbaren Haken aufweist, der in der Sperrstellung einen am Sitzgestell vorgesehenen Bolzen erfaßt.

Zwischen die oberen Enden der beiden Längsholme 1 ist, wie insbesondere Fig. 1 zeigt, ein Jochteil 7 eingesetzt, bei dem es sich um einen einstückig ausgebildeten Kunststoffkörper handelt. Das Jochteil 7 hat, wie Fig. 1 zeigt, eine an den Verlauf der Längsholme angepaßte Trapezform. Die dem Rücken des Sitzbenutzers zugekehrte, trapezförmige Vorderwand 8 des Jochteils 7 ist sowohl durch an ihre Rückseite angeformte Rippen 9 als auch durch die beiden Seitenwände 10, welche der Innenseite des einen bzw. anderen Längsholms 1 zugekehrt sind, sowie durch die obere Begrenzungswand 11 und die untere Begrenzungswand 12 versteift. Das Jochteil 7 stellt deshalb einen biege- und knicksteifen Abstandhalter dar, der verhindert, daß sich der Abstand der beiden Längsholme 1 voneinander infolge einer auf den Sitz einwirkenden Belastung verringern kann, obwohl das Jochteil 7 nur von hinten her zwischen die beiden Längsholme 1 eingreift, jedoch nicht mit diesen unmittelbar verbunden ist.

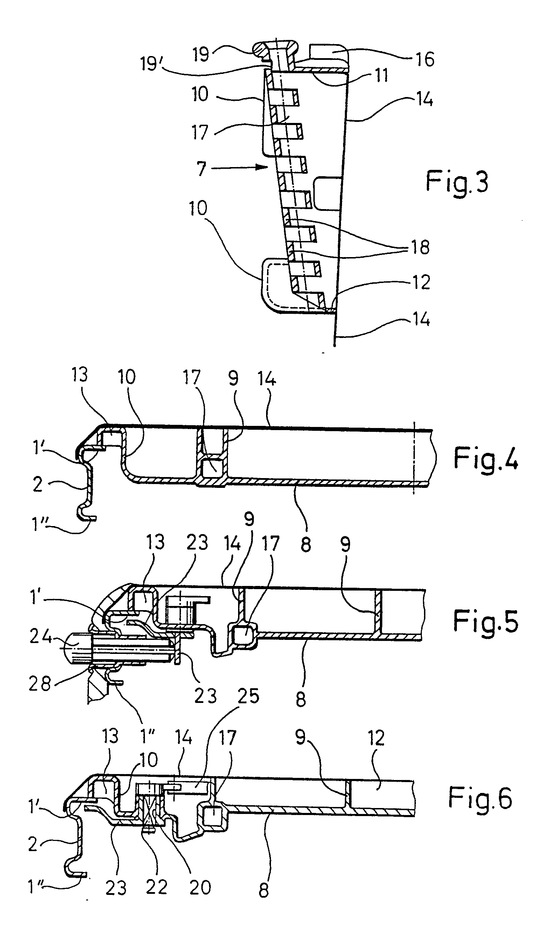

An die beiden Seitenwände 10 des Jochteils 7 ist je eine seitlich überstehende Leiste 13 angeformt, die sich längs des hinteren Randes der Seitenwand von der oberen Begrenzungswand 11 bis zur unteren Begrenzungswand 12 erstrecken. Diese hohlen Leisten 13, welche nach vorne offen sind und durch Querrippen versteift werden, hintergreifen die Längsholme 1, wie die Fig. 4 bis 6 zeigen, und liegen an der nach hinten weisenden Seite des hinteren Schenkels 1' des Längsholmes 1 an. Die in Richtung vom hinteren Schenkel 1' zum vorderen Schenkel 1" des Längsholmes 1 gemessene Dicke der Leisten 13 nimmt von der oberen Begrenzungswand 11 zur unteren Begrenzungswand 12 hin ab.

An der offenen Rückseite des Jochteils 7 liegt ein biegeweiches Blech 14 an, das relativ dünn ist und im Ausführungsbeispiel eine Dicke von 0,4 mm hat. Der obere Rand dieses Bleches 14 wird vom hinteren Rand der oberen Begrenzungswand 11 des Jochteils 7 übergriffen, der etwas über die Rückseite des Jochteils 7 übersteht und dadurch eine Auflagefläche bildet, mit der sich das Jochteil 7 auf dem Blech 14 von oben her abstützen kann. Nach unten erstreckt sich das Blech 14 bis in die Nähe des unteren Holmendes. Die beiden seitlichen Randzonen des Bleches 14 sind, wie die Fig. 2 und 4 bis 6 zeigen, um die hintere Längskante der Längsholme 1 herumgeführt und an deren nach außen weisende Jochseite angelegt, wo sie im Bereich zwischen der Sicke 2 und dem hinteren Schenkel 1', beispielsweise durch Punktschweißen, fest mit dem einen bzw. anderen Längsholme verbunden sind. Bei einer Belastung der Rükkenlehne von vorne her erfahren deshalb die Längsholme 1 keine Torsionsbeanspruchung, sondern nur eine Biegebeanspruchung, wobei das Jochteil 7 eine Annäherung der Längsholme zueinander verhindert, so daß eine hohe Biegesteifigkeit der Längsholme nur hinsichtlich einer Biegebeanspruchung in der Schwenk- oder Klapprichtung erforderlich ist.

Eine Verschiebung des Jochteils 7 relativ zu den Längsholmen 1 gegen deren unteres Ende hin wird dadurch verhindert, daß die obere Begrenzungswand 11 den oberen Rand des Bleches 14 übergreift. Außerdem können Schrauben 15 vorgesehen sein, welche das Blech 14 von hinten her durchdringen und in das Jochteil 7 eingreifen. Mittels solcher Schrauben 15 kann auch die Anlage des Bleches 14 an der Rückseite des Jochteils 7 verbessert werden, so daß ein relativ geringer Überstand der oberen Begrenzungswand 11 über die Rückseite des Jochteils 7 ausreicht, um eine Auflage auf dem oberen Rand des Bleches 14 zu gewährleisten. Man könnte allerdings den oberen Rand des Bleches 14 oder Teile desselben gegen die Vorderseite des Jochteils 7 hin abkanten und diesen abgekanteten Teil
in das Innere des Jochteils eingreifen lassen.
Eine andere Möglichkeit wäre ein Eingriff des
oberen Randes des Bleches 14 in eine nach
unten hin offene Nut des Jochteils 7. Die obere
Begrenzungswand 11 ist durch angeformte
Rippen versteift, um sich bei einer Belastung von
oben her nicht zu deformieren.

Eine Verschiebung des Jochteils 7 nach
unten hin wird nicht nur durch die Auflage der
oberen Begrenzungswand 1 1 auf dem Blech 14
sowie durch die Schrauben 15 verhindert. Da die
Leisten 13 sich nach unten keilförmig verjüngen,
sichert auch die vom Blech 14 einerseits und andererseits von dem hinteren Schenkel 1' der
Längsholme 1 auf die Leisten 13 ausgeübte
Klemmwirkung eine Verschiebung des Jochteils 7
nach unten. Dadurch, daß die Leisten 13 zwischen den hinteren Schenkel 1' der Längsholme
1 und das Blech 14 eingeklemmt sind, ist eine
Verschiebung des Jochteils 7 nach vorn oder
hinten relativ zu den Längsholmen 1 ebenfalls
nicht möglich.

An das obere Ende der beiden Leisten 13 ist
je eine Kappe 16 angeformt. Diese beiden
Kappen decken zumindest teilweise das obere
Ende der Längsholme 1 ab.

Wie insbesondere Fig. 1 zeigt, weist das
Jochteil 7 zwei von oben nach unten durchgehende Führungskanäle 17 auf, die der Aufnahme je
einer Tragstange einer Kopfstütze dienen und daher parallel zueinander sowie symmetrisch zur
Mitte des Jochteils 7 angeordnet sind und den bei
Kopfstützen mit zwei Tragstangen üblichen
Abstand voneinander haben. Die in Längsrichtung der Führungskanäle 17 gemessene Höhe
des Jochteils 7 ist so groß gewählt, daß zusätzlich zu den Führungskanälen 17 keine weiteren
Halteelemente oder dergleichen notwendig sind,
um die Tragstangen der Kopfstütze zu führen und
die in jeder möglichen Höheneinstellung der
Kopfstütze auftretenden Kräfte aufnehmen und in
die Längsholme 1 einleiten zu können. Die in das
Jochteil 7 eingeformten Führungskanäle 17
haben einen quadratischen Querschnitt, wobei
die Seitenlänge so gewählt ist, daß die zylindrischen Tragstangen einer Kopfstütze spielfrei in
den Führungskanälen 17 liegen, dennoch aber
mit einem relativ geringen Kraftaufwand in Stablängsrichtung verschoben werden können, wie
dies für die Höhenverstellung notwendig ist. Nach
vorne und nach hinten sind die Führungskanäle
17 durch einstückig mit dem Jochteil 7 ausgebildete Querstege 18 begrenzt, die in Längsrichtung
der Führungskanäle 17 in ihrer Breite entsprechenden Abständen voneinander angeordnet
sind. Dabei sind aus Fertigungsgründen die
Stege 18, welche die Führungskanäle nach vorne
hin begrenzen, auf die Zwischenräume zwischen
den Stegen der Rückseite ausgerichtet. Die
Nachgiebigkeit der Stege 18 reicht aus, um Toleranzen auszugleichen. An das obere Ende der
Führungskanäle 17 schließt sich je eine an die
Oberseite der oberen Begrenzungswand 11 angeformte Hülse 19 an, deren freies Ende durch
einen nach außen überstehenden Ringwulst verstärkt ist. Ein in der Vorderseite der Hülsen 19
vorgesehener Querschlitz 19' ermöglicht den Eingriff je einer nicht dargestellten, auf der oberen
Begrenzungswand 11 aufliegenden Schenkelfeder mit ihrem einen Schenkel in die üblicherweise
in den Tragstangen der Kopfstützen vorhandenen
Rasten.

Das Jochteil 7 ist sowohl in seinen beiden an
die Seitenwände 10 angrenzenden Abschnitten
als auch in der Mitte mit je einer Lagerbohrung 20
bzw. 21 versehen, welche je von einer einstückig
mit dem Jochteil 7 ausgebildeten, nabenartigen
Werkstoffpartie begrenzt werden. Die Lagerbohrungen 20 münden je in eine nach vorne offene
Vertiefung des Jochteils 7. Die beiden Lagerbohrungen 20 dienen je der Aufnahme eines
Lagerzapfens 22 eines Mechanismusses zum
Lösen der Klappsperre. Auf den Lagerzapfen 22
ist in beiden Vertiefungen je ein Schwenkhebel
23 gelagert, der mittels einer Handhabe, beispielsweise eines durch den Längsholm 1 hindurchgeführten Betätigungsknopfes 24, geschwenkt werden kann. Der Betätigungsknopf 24
ist in einer Buchse 28 geführt, die mittels einer
Ringschulter den Verschiebeweg des Betätigungsknopfes begrenzt. Über ein Verbindungsgestänge 25, das einen Umlenkhebel aufweist,
der auf einem in der Lagerbohrung 21 festgelegten Zapfen schwenkbar gelagert ist, wird die
Drehbewegung eines drehfest mit dem einen
Schwenkhebel 23 verbundenen, neben der Rückseite des Jochteils 7 angeordneter Schwenkarm
auf einen entsprechend ausgebildeten und
angeordneten Schwenkarm des anderen
Schwenkhebels 23 übertragen. Bei einer etwas
anderen Ausbildung der Schwenkhebel 23
genügt als Verbindungsgestänge auch eine
einzige Stange 25'. Die beiden Schwenkhebel 23
haben je einen gegen den benachbarten Längsholm weisenden Schenkel, mit dem das obere
Ende eines Zuges verbunden ist, dessen unteres
Ende an dem schwenkbaren Haken 6 angreift,
der in seiner Sperrstellung ein Klappen der Rükkenlehne verhindert. Durch eine Bewegung der
mit den beiden Zügen verbundenen Schenkel der
Schwenkhebel 23 nach oben werden die beiden
Haken 6 entgegen der Kraft je einer Rückstellfeder in ihre Freigabestellung geschwenkt.

Das einstückig ausgebildete Jochteil 7, das
zusammen mit den beiden Längsholmen 1 sowie
dem Blech 14 einen schalenartigen Träger für
das Rückenlehnenpolster 27 bildet, weist also bereits alle Elemente auf, welche für die Halterung
einer Kopfstütze und die Aufnahme eines Mechanismusses zum Lösen der Klappsperre benötigt
werden.

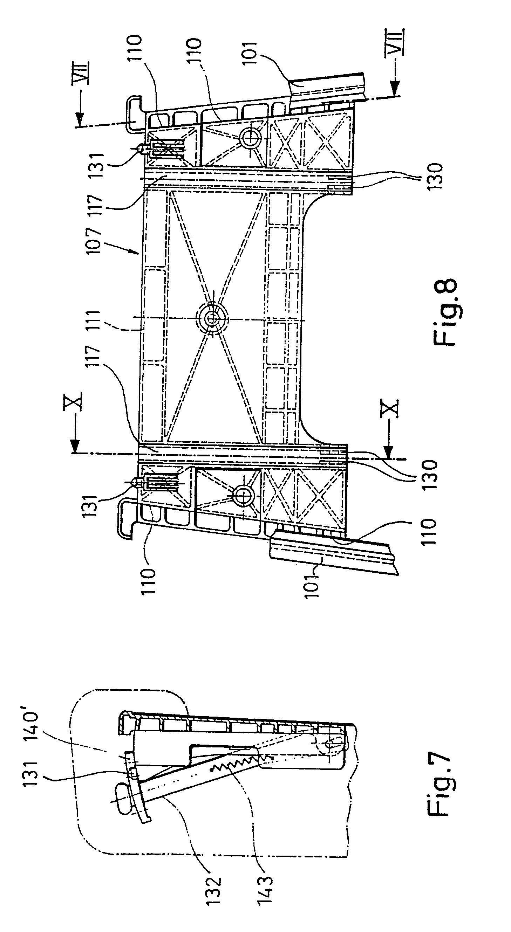

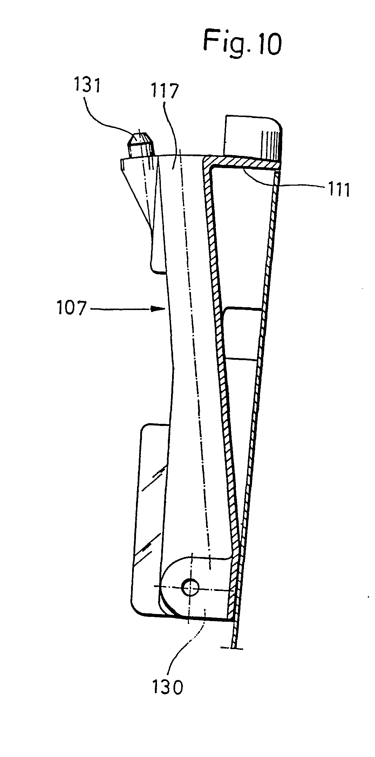

Das in den Fig. 7 bis 12 dargestellte, zweite
Ausführungsbeispiel unterscheidet sich von dem
vorstehend beschriebenen ersten Ausführungsbeispiel im wesentlichen nur dadurch, daß es
eine schwenkbare und in wählbaren Schwenkstellungen feststellbare Schulterstütze hat. Übereinstimmend mit dem ersten Ausführungsbeispiel ist die Form der beiden Längsholme 101. Das ebenfalls einstückig ausgebildete, aus Kunststoff bestehende Jochteil 107 bildet wie bei dem ersten Ausführungsbeispiel einen biege- und knicksteifen Abstandhalter für die beiden Längsholme 101, zwischen deren obere Enden das Jochteil 107 von hinten her eingesetzt ist. Auch die Festlegung des Jochteils 107 in dieser Lage erfolgt wie bei dem Ausführungsbeispiel gemäß den Fig. 1 bis 6. Zur Vermeidung von Wiederholungen wird deshalb insoweit auf die Ausführungen zu dem ersten Ausführungsbeispiel Bezug genommen, als im folgenden keine unterschiedliche Ausbildung erläutert ist.

Da die Kopfstütze von der Schulterstütze getragen wird, sind die Längskanäle 117 des Jochteils 107 nach vorne hin offen, also als Halterung für eine Kopfstütze ungeeignet. Allerdings könnten die Längskanäle 117 nach vorne hin auch durch Stege begrenzt sein. Da die Längskanäle 117 nicht als Halterung für Tragstangen einer Kopfstütze benötigt werden, fehlen ihre Verlängerungen über die obere Begrenzungswand 111 hinaus.

An die die beiden Längskanäle 117 nach hinten begrenzende Wand sind im Bereich des unteren Endes der Längskanäle 117 nach vorne vorspringende Lagerwangen 130 angeformt, die mit je einer Bohrung zur Aufnahme eines Lagerzapfens versehen sind. Die beiden Lagerzapfen fluchten miteinander und definieren eine Schwenkachse, die parallel zur Schwenkachse der gesamten Rückenlehne liegt.

In den beiden nach außen hin an die Längskanäle 117 anschließenden Seitenabschnitten ist an die Vorderseite des Jochteils 107 ferner je ein nach oben über die obere Begrenzungswand 111 überstehender Verriegelungszapfen 131 angeformt, dessen Längsachse auf die von den Bohrungen der Lagerwangen 130 definierte Schwenkachse ausgerichtet ist, wie Fig. 10 zeigt.

Die in Längsrichtung der Längskanäle 117 gemessene Höhe des Jochteils 107 wird durch den erforderlichen Abstand zwischen den Lagerwangen 130 und der oberen Begrenzungswand 111 bestimmt. Da der Mittelabschnitt des Jochteils 107 keine so große Höhe aufweisen muß, stehen aus Gründen der Gewichts- und Materialersparnis im Ausführungsbeispiel die beiden Seitenabschnitte, welche die Lagerwangen 130 tragen, über den unteren Rand des Mittelabschnitts über.

Die Schulterstütze 132 ist ein einstückig ausgebildeter Kunststoffkörper, der seitlich durch je eine einstückig mit den übrigen Teilen ausgebildete Vierkantführung 137 begrenzt ist.

Diese beiden Vierkantführungen 137 dienen der Aufnahme von zwei Tragstangen einer Kopfstütze. Ihr quadratischer freier Querschnitt ist daher an den Durchmesser dieser Tragstangen angepaßt. Wie die Führungskanäle 17 sind die durch die beiden Vierkantführungen 137 gebildeten Führungskanäle nach vorne und hinten durch in Kanallängsrichtung im Abstand voneinander angeordnete Querstege 118 begrenzt. Unmittelbar unterhalb des einen nach außen überstehenden Ringwulst tragenden, oberen Endes der beiden Vierkantführungen 137 sind diese auf ihrer Vorderseite mit einem Querschlitz 137' für den Eingriff des einen Schenkels einer Rastfeder versehen.

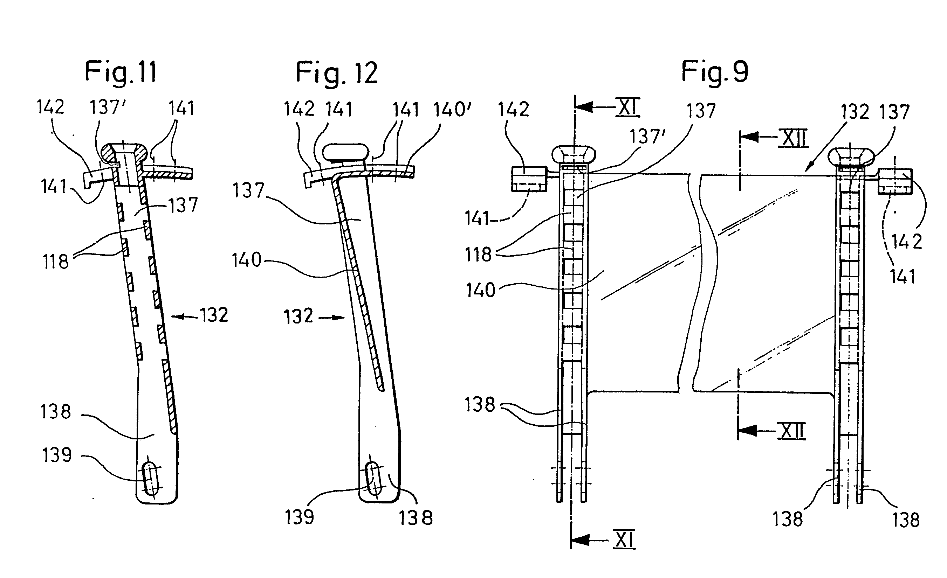

Die beiden durch die Querstege 118 miteinander verbundenen Seitenwände der Vierkantführungen 137 sind über das untere Rohrende hinaus verlängert und bilden je ein Wangenpaar 138, das zwischen die Lagerwangen 130 eingreift. Die Wangen dieser Lagerwangenpaare 138 sind mit je einem Langloch 139 versehen, wie Fig. 11 zeigt. Die Schulterstütze 132 ist daher nicht nur um die beiden Lagerzapfen, welche die Lagerwangen 130 und die Wangenpaare 138 durchdringen, schwenkbar, sondern auch relativ zum Jochteil 107 in Richtung der Längserstreckung der Langlöcher 139 translatorisch verschiebbar. Die beiden Vierkantführungen 137 sind durch ein plattenförmiges Mittelteil 140 verbunden, das in seiner Größe dem Mittelteil des Jochteils 107 entspricht. Wie Fig. 12 zeigt, weist das Mittelteil 140 nicht nur eine dem Rücken des Sitzbenutzers zugekehrte Platte auf, sondern auch eine sich von deren oberem Rand nach hinten erstreckende, obere Begrenzungswand 140', welche die obere Begrenzungswand 111 des Jochteils 107 übergreift. Diese obere Begrenzungswand 140' erstreckt sich seitlich über die Vierkantführungen 137 hinaus fort. Die beiden äußeren Randzonen 142, welche, wie die Fig. 11 und 12 zeigen, nach vorne über die Vierkantführungen 137 und den Mittelteil 140 hinaus verlängert sind, sind je mit einer sich in der Schwenkrichtung erstreckenden Reihe von Löchern 141 versehen, welche auf den einen bzw. anderen Verriegelungszapfen 131 ausgerichtet sind. Je nach der gewünschten Neigungslage der Schulterstütze 132 gegenüber dem Jochteil 107 greifen die Verriegelungszapfen 131 von unten her in jeweils ein Loch 141 der beiden Lochreihen ein. Da sich die Langlöcher 139 gegen die Lochreihen hin erstrecken, können durch ein Verschieben der Schulterstütze 132 nach oben relativ zum Jochteil 107 die Verriegelungszapfen 131 außer Eingriff gebracht werden. Die Schulterstütze 132 kann sodann in eine andere Schwenklage gebracht werden, in der zwei andere der Löcher 141 auf die beiden Verriegelungszapfen 131 ausgerichtet sind, damit die Schulterstütze 132 in der neuen Schwenklage wieder durch ein Absenken verriegelt werden kann. In der abgesenkten, verriegelten Lage wird die Schulterstütze 132 durch zwei vorgespannte Zugfedern 143 gehalten, deren eines Ende an der einen bzw. anderen Seite der Schulterstütze 132 festgelegt ist und deren anderes Ende an einer tieferliegenden Stelle in das Jochteil 107 eingehängt ist, wie Fig. 7 zeigt.

**Patentansprüche**

1. Rückenlehne für einen Fahrzeugsitz, insbesondere einen Kraftfahrzeugsitz, mit Teile eines Polsterträgers bildenden Längsholmen (1) aus Stahlblech und einem Jochteil (7, 107) das sich vom einen zum anderen Längsholm im Bereich von deren oberem Ende erstreckt, *dadurch gekennzeichnet,* daß mit dem Jochteil (7; 107) die Halterung (17, 19) für eine Kopfstütze und/oder das Lager (130) für eine relativ zum Jochteil schwenkbare Schulterstütze (132) und/oder eine Aufnahme (20, 21) für einen Mechanismus zum Lösen einer Klappsperre (6) der Rückenlehne zu einer aus einem einstückig ausgebildeten Kunststoffkörper bestehenden Baueinheit vereinigt sind.

2. Rückenlehne nach Anspruch 1, dadurch gekennzeichnet, daß die Schulterstütze (132) aus Kunststoff besteht und eine einstückig mit ihr ausgebildete Halterung (137) für eine Kopfstütze aufweist.

3. Rückenlehne nach Anspruch 2, dadurch gekennzeichnet, daß an die Schulterstütze (132) und das Jochteil (107) zusammenwirkende Verriegelungselemente (131, 142) angeformt sind, mittels deren die Schulterstütze (132) in unterschiedlichen Schwenkstellungen verriegelbar ist.

4. Rückenlehne nach Anspruch 3, dadurch gekennzeichnet, daß die zusammenwirkenden Verriegelungselemente die Form eines sich in der Schwenkrichtung der Schulterstütze (132) erstreckenden Lochstreifens (142) bzw. eines von unten nach oben das der gewählten Schwenkstellung entsprechende Loch (141) dieses Streifens durchgreifenden Zapfen (131) hat und daß von den zur schwenkbaren Verbindung der Schulterstütze (132) mit dem Jochteil (107) an diesen beiden Teilen angeformten und ineinandergreifenden Wangen (130, 138) diejenigen des einen Teils (132) mit einem Langloch (139) für den Durchtritt eines Lagerbolzens versehen sind, wobei die Längserstreckung des Langloches (139) zumindest annähernd gleich der Erstreckungsrichtung des Zapfens (131) ist.

5. Rückenlehne nach einem der Ansprüche 1 bis 4, dadurch gekennzeichnet, daß das Jochteil (7; 107) und die Schulterstütze (132) Spritzteile sind.

6. Rückenlehne nach einem der Ansprüche 1 bis 5, dadurch gekennzeichnet, daß die Halterung für eine Kopfstütze wenigstens einen Führungskanal (17; 137) für die Aufnahme einer Tragstange der Kopfstütze aufweist, der einen quadratischen Querschnitt hat, wobei die Seitenlänge dieses Quadrates an den Durchmesser einer runden Tragstange angepaßt ist.

7. Rückenlehne nach Anspruch 6, dadurch gekennzeichnet, daß jeder Führungskanal (17; 137) nach vorne und hinten durch, Stege (18; 118) begrenzt ist, die mit ihrer Breite entsprechenden Abständen voneinander in Längsrichtung des Kanales nebeneinander angeordnet und auf die Zwischenräume zwischen den Stegen der gegenüberliegenden Seite ausgerichtet sind.

8. Rückenlehne nach einem der Ansprüche 1 bis 7, dadurch gekennzeichnet, daß das Jochteil (7; 107) als biegesteifer, bei einer Belastung der Längsholme (1; 101) nur deren Annäherung aneinander verhindernder Abstandhalter zwischen die Längsholme gelegt ist und mit seiner Rückseite an einem biegeweichen Blech (14) anliegt, das mit der Außenseite der Längsholme (1; 101) fest verbunden ist.

9. Rückenlehne nach Anspruch 8, dadurch gekennzeichnet, daß das Jochteil (7; 107) an seinen beiden dem einen bzw. anderen Längsholm (1; 101) zugewandten Enden je einen keilförmigen Vorsprung (13) aufweist, welcher einerseits an dem Blech (14) und andererseits an der diesem Blech zugewandten Rückseite des Längsholmes (1; 101) anliegt.

10. Rückenlehne nach Anspruch 9, dadurch gekennzeichnet, daß die Vorsprünge (13) in Längsrichtung der Seitenholme (1; 101) nach unten hin keilförmig verjüngt sind.

11. Rückenlehne nach einem der Ansprüche 8 bis 10, dadurch gekennzeichnet, daß die Längsholme (1; 101 ) zumindest in demjenigen Bereich, in dem sich das Jochteil (7; 107) befindet, einen zum oberen Ende hin abnehmenden Abstand voneinander haben und daß das Jochteil (7; 107) eine entsprechend nach oben hin abnehmende Breite hat.

12. Rückenlehne nach einem der Ansprüche 8 bis 11, dadurch gekennzeichnet, daß das Jochteil (7; 107) auf seiner Rückseite eine den oberen Rand des Bleches (14) übergreifende Stufe aufweist.

13. Rückenlehne nach einem der Ansprüche 1 bis 12, dadurch gekennzeichnet, daß der Mechanismus zum Lösen der Klappsperre (6) wenigstens einen in einer Vertiefung des Jochteils (7; 107) drehbar in letzterem gelagerten, manuell betätigbaren Schwenkhebel (23) aufweist.

14. Rückenlehne nach Anspruch 13, dadurch gekennzeichnet, daß die neben dem einen Längsholm (1) vorgesehene, den Schwenkhebel (23) aufnehmende Vertiefung des Jochteils (7; 107) nach vorne hin offen ist und der Schwenkhebel (23) einen drehfest mit ihm verbundenen sowie auf der ihn tragenden Welle neben der Rückseite des Jochteils angeordneten Schwenkarm aufweist, der über ein Gestänge (25, 25') mit einem zweiten Schwenkhebel (23) gekoppelt ist, der in einer neben dem anderen Längsholm (1) vorgesehenen Vertiefung des Jochteils (7; 107) drehbar gelagert ist, wobei das Gestänge (25') bei einer Drehbewegung des einen Schwenkhebels (23) eine Drehbewegung des anderen Schwenkhebels (23) erzeugt.

15. Rückenlehne nach Anspruch 14, dadurch gekennzeichnet, daß das Gestänge aus einer einzigen Stange (25') besteht, die mit dem Schwenkarm des einen Schwenkhebels (23) sowie einem entsprechenden Schwenkarm des anderen Schwenkhebels (23) im Abstand von deren Schwenkachse schwenkbar verbunden ist.

16. Rückenlehne nach Anspruch 14, dadurch gekennzeichnet, daß das Gehäuse (25) einen drehbar am Jochteil (7; 107) gelagerten, doppelarmigen Umlenkhebel sowie zwei Verbindungsstangen aufweist, die mit dem einen Arm des Umlenkhebels und dem Schwenkarm des einen Schwenkhebels (23) bzw. mit dem anderen Arm des Umlenkhebels und dem Schwenkarm des anderen Schwenkhebels (23) gelenkig verbunden sind.

Claims

1. Backrest for a vehicle seat, particularly a motor vehicle seat, with longitudinal spars (1) made from sheet steel which form parts of an upholstery frame and with a yoke piece (7, 107) which extends from one longitudinal spar to the other near the top end thereof, characterised in that the retaining member (17, 19) for a head support and/or the mounting (130) for a shoulder support (132) adapted to swivel relative to the yoke piece, and/or a locator (20, 21) for a mechanism for releasing a swing catch (6) for the headrest are combined with the yoke piece (7; 107) into a constructional unit consisting of a one-piece plastic body.

2. Backrest according to claim 1, characterised in that the shoulder support (132) is made of plastic and has a head support retaining member (137) integral therewith.

3. Backrest according to claim 2, characterised in that cooperating locking members (131, 142) are moulded onto the shoulder support (132) and the yoke piece (107), by means of which locking members the shoulder support (132) can be locked in various swivel positions.

4. Backrest according to claim 3, characterised in that the cooperating locking members are in the form of a perforated strip (142), extending in the direction of swivel of the shoulder support (132), and a peg (131) which passes from bottom to top through the hole (141) of said strip that corresponds to the selected swivel position, and in that of the cheeks (130, 138) which, in order to pivotably connect the shoulder support (132) with the yoke piece (107) are moulded on said two parts and engage in one another, the cheeks of one part (132) are provided with a slot (139) for the passage of a bed bolt, the longitudinal extension of the slot (139) being at least approximately identical to the direction of extension of the peg (131).

5. Backrest according to one of claims 1 to 4, characterised in that the yoke piece (7; 107) and the shoulder support (132) are injection mouldings.

6. Backrest according to one of claims 1 to 5, characterised in that the retaining member for a head support has at least one guiding channel (17; 137) for receiving a carrying rod for the head support, said channel being square in cross-section and the length of one side of said square being adapted to the diameter of a round carrying rod.

7. Backrest according to claim 6, characterised in that each guiding channel (17; 137) is delimited to the front and rear by crosspieces (18; 118) spaced alongside one another in the longitudinal direction of the channel, at distances corresponding to their width, and aligned with the gaps between the crosspieces of the opposite side.

8. Backrest according to one of claims 1 to 7, characterised in that the yoke piece (7; 107) is set between the longitudinal spars (1; 101) as a rigid spacing member which when a load is placed on said longitudinal spars only prevents them from drawing near one another, and the reverse side of which yoke piece rests against a flexible metal sheet (14) permanently joined to the outer face of the longitudinal spars (1; 101).

9. Backrest according to claim 8, characterised in that the yoke piece (7; 107) has on each of its two ends facing one or other longitudinal spar (1; 101) a wedgeshaped projection (13), which rests on the one hand against the metal sheet (14) and on the other hand against the reverse side of the longitudinal spar (1; 101) nearest said metal sheet.

10. Backrest according to claim 9, characterised in that the projections (13) are tapered cuneiformly downwards in the longitudinal direction of the side spars (1; 101).

11. Backrest according to one of claims 8 to 10, characterised in that the longitudinal spars (1; 101), at least in the area in which the yoke piece (7; 107) is situated, are spaced apart from one another by a distance which decreases towards the top end, and that the width of the yoke piece (7; 107) decreases correspondingly towards the top.

12. Backrest according to one of claims 8 to 11, characterised in that on its reverse side the yoke piece (7; 107) has a step which overlaps the top edge of the metal sheet (14).

13. Backrest according to one of claims 1 to 12, characterised in that the mechanism for releasing the swing catch (6) has at least one manually actuated swivelling lever (23), mounted in a depression in the yoke piece (7; 107) so as to be rotatable therein.

14. Backrest according to claim 13, characterised in that the depression in the yoke piece (7; 107) provided alongside one longitudinal spar (1) and receiving the swivelling lever (23) is open towards the front, and the swivelling lever (23) has a swivel arm which is nonrotatably joined to it and disposed on the shaft carrying it alongside the reverse of the yoke piece, said swivel arm being coupled via a linkage (25, 25') to a second swivel lever (23) which is rotatably mounted in a depression in the yoke piece (7; 107) provided alongside the other longitudinal spar (1), the linkage (25') producing, whenever one swivelling lever (23) rotates, a rotational movement of the other swivelling lever (23).

15. Backrest according to claim 14, characterised in that the linkage consists of a single rod (25'), which is pivotably connected to the swivel arm of one swivelling lever (23) and to a corresponding swivel arm of the other swivelling lever (23) at a distance from the swivel axis thereof.

16. Backrest according to claim 14, characterised in that casing (25) has a two-armed reversing lever mounted rotatably on the yoke piece (7; 107), as well as two connecting rods, which are hinged, respectively, with one arm of the reversing lever and the swivel arm of one swivelling lever (23), and with the other arm of the reversing lever and the swivel arm of the other swivelling lever (23).

**Revendications**

1. Dossier pour un siège de véhicule, notamment un siège de véhicule automobile, comportant des parties de longeron (1) en tôle d'acier, formant un support de rembourrage, ainsi qu'une partie-étrier (7, 107) qui s'étend d'un longeron à l'autre dans la zone de leur extrémité supérieure, caractérisé en ce que la partie-étrier (7, 107) est combinée avec le support (17, 19) d'un appui-tête et/ou le support (130) d'un appui d'épaules (132) pouvant pivoter par rapport à la partie-étrier, et/ou un réceptacle (20, 21) pour un mécanisme servant à la libération d'un verrou rabattable (6) du dossier, sous la forme d'une unité fonctionnelle se composant d'un corps en matière plastique réalisé d'une seule pièce.

2. Dossier selon la revendication 1, caractérisé en ce que l'appui d'épaules (132) est réalisé en matière plastique et comporte un support (137), formant une seule pièce avec lui, pour un appui-tête.

3. Dossier selon la revendication 2, caractérisé en ce que sur l'appui d'épaules (132) et la partie-étrier (107) sont formés des éléments coopérants de verrouillage (131, 142), au moyen desquels l'appui d'épaules (132) peut être verrouillé dans différentes positions angulaires.

4. Dossier selon la revendication 3, caractérisé en ce que les éléments coopérants de verrouillage ont la forme d'une bande perforée (142), s'étendant dans la direction de pivotement de l'appui d'épaules (132), et d'une broche (131) traversant du bas vers le haut le trou (141) de cette bande qui correspond à la position angulaire sélectionnée, et en ce que des ailes (130, 138) sont formées, pour assurer la liaison pivotante de l'appui d'épaules (132) avec la partie-étrier (107), sur ces deux parties, en s'accrochant l'une dans l'autre, les ailes d'une des parties (132) étant pourvues d'un trou oblong (139) pour le passage d'un tourillon d'appui, l'orientation longitudinale du trou oblong (139) étant au moins approximativement identique à l'orientation longitudinale de la broche (131).

5. Dossier selon une des revendications 1 à 4, caractérisé en ce que la partie-étrier (7; 107) et l'appui d'épaules (132) sont des pièces moulées par injection.

6. Dossier selon une des revendications 1 à 5, caractérisé en ce que le support d'un appui-tête comporte au moins un canal de guidage (17; 137) pour recevoir une tige de support de l'appui-tête, qui a une section droite carrée, la dimension du côté de ce carré étant adaptée au diamètre d'une tige de support de section circulaire.

7. Dossier selon la revendication 6, caractérisé en ce que chaque canal de guidage (17; 137) est limité vers l'avant et vers l'arrière par des nervures (18; 118), qui sont disposées l'une à côté de l'autre en étant espacées l'une de l'autre, dans la direction longitudinale du canal, de distances correspondant à la largeur du canal, et qui sont alignées avec les espaces intermédiaires existant entre les nervures situées du côté opposé.

8. Dossier selon une des revendications 1 à 7, caractérisé en ce que la partie-étrier (7; 107) est agencée sous la forme d'une entretoise d'espacement, rigide à la flexion, disposée entre les longerons et empêchant seulement leur rapprochement mutuel lors d'une sollicitation desdits longerons (1; 101), ladite partie-étrier s'appliquant par son côté arrière contre une tôle (14) souple à la flexion et qui est reliée rigidement au côté extérieur des longerons (1; 101).

9. Dossier selon la revendication 8, caractérisé en ce que la partie-étrier (7; 107) comporte, à ses deux extrémités dirigées vers l'un ou l'autre des longerons (1; 101) respectivement une saillie en forme de coin (13), qui s'applique d'un côté contre la tôle (14) et de l'autre côté contre le bord arrière, dirigé vers cette tôle, du longeron (1; 101).

10. Dossier selon la revendication 9, caractérisé en ce que les saillies (13) sont effilées en forme de coin vers le bas dans la direction longitudinale des longerons (1; 101).

11. Dossier selon une des revendications 8 à 10, caractérisé en ce que les longerons (1; 101) présentent l'un par rapport à l'autre un espacement diminuant vers l'extrémité supérieure, au moins dans la zone où se trouve la partie-étrier (7; 107), et en ce que la partie-étrier (7; 107) a une largeur qui diminue en correspondance vers le haut.

12. Dossier selon une des revendications 8 à 11, caractérisé en ce que la partie-étrier (7; 107) comporte sur son côté arrière un gradin s'accrochant sur le bord supérieur de la tôle (14).

13. Dossier selon une des revendications 1 à 12, caractérisé en ce que le mécanisme de libération du verrou rabattable (6) comporte au moins un levier pivotant (23) pouvant être actionné manuellement et monté de façon tournante dans un creux de la partie étrier (7; 107).

14. Dossier selon la revendication 13, caractérisé en ce que le creux de la partie-étrier (7; 107), disposée à côté d'un des longerons (1) et recevant le levier pivotant (23), est ouvert vers l'avant, et le levier pivotant (23) comporte un bras pivotant, relié sans possibilité de rotation relative avec lui, disposé sur l'arbre qui le supporte à côté du côté arrière de la partie-étrier et qui est accouplé par l'intermédiaire d'une tringlerie (25, 25') avec un second levier pivotant (23), qui est monté à rotation dans un creux de la partie-étrier (7; 107), prévue à côté de l'autre longeron (1), la tringlerie (25') produisant, lors d'un mouvement de rotation d'un des leviers pivotants (23), un mouvement de rotation de l'autre levier pivotant (23).

15. Dossier selon la revendication 14, caractérisé en ce que la tringlerie se compose d'une seule tige (25'), qui est reliée de façon pivotante avec le bras pivotant d'un des leviers pivotants (23) ainsi qu'avec un bras pivotant correspondant de l'autre levier pivotant (23), en étant espacée de son axe de pivotement.

16. Dossier selon la revendication 14, caractérisé en ce que le carter (25) comporte un levier de renvoi à double bras, monté à rotation sur la partie-étrier (7; 107), ainsi que deux tiges de liaison qui sont reliées de façon articulée avec un des bras du levier de renvoi et le bras pivotant d'un des leviers pivotants (23) ou bien avec l'autre bras du levier de renvoi et le bras pivotant de l'autre levier pivotant (23).

# Fig.1

# Fig.2

Fig.3

Fig.4

Fig.5

Fig.6

Fig.7

Fig.8

EP 0 096 858 B1

Fig. 10

Fig. 9

Fig. 11

Fig. 12